# EUROPÄISCHE PATENTSCHRIFT

(11) **EP 1 837 151 B1**
(45) Veröffentlichungstag und Bekanntmachung des Hinweises auf die Patenterteilung: **15.06.2011**
(21) Anmeldenummer: 07004296.5
(22) Anmeldetag: 02.03.2007
(51) Int. Cl.: B29C 45/17, B29C 45/16

(54) **Verfahren zum Herstellen von Kunststoffteilen**
Method for manufacturing plastic parts
Procédé de fabrication de pièces en plastique

(30) Priorität: 24.03.2006 DE 202006004901 U
(43) Veröffentlichungstag der Anmeldung: 26.09.2007
(73) Patentinhaber: Olho Sinsheim GmbH, 74889 Sinsheim (DE)
(72) Erfinder: Fassl, Thomas, 75031 Eppingen (DE)
(74) Vertreter: Clemens, Gerhard

(56) Entgegenhaltungen:
- EP-A- 1 484 154
- EP-A1- 0 636 465
- EP-A2- 1 182 078
- WO-A-03/009724
- DE-A1- 19 808 145
- JP-A- 2001 096 633
- US-A1- 2002 070 484
- GUYOT H: "SOFT BUT STRONG" EUROPEAN PLASTICS NEWS, EMAP BUSINESS PUBLICATION, LONDON, GB, Bd. 22, Nr. 1, Januar 1995 (1995-01), Seite 17, XP000482838 ISSN: 0306-3534
- BRUNSWICK A: "GEWUSST WIE! FRAGEN UND ANTWORTEN ZUR WASSERINJEKTIONSTECHNIK" KUNSTSTOFFE, CARL HANSER VERLAG, MUNCHEN, DE, Bd. 92, Nr. 9, September 2002 (2002-09), Seiten 94-98, XP001119349 ISSN: 0023-5563

## Beschreibung

### TECHNISCHES GEBIET

Die vorliegende Erfindung betrifft ein Verfahren zum Herstellen von Kunststoffteilen mit folgenden Verfahrensschritten Einbringen oder Einspritzen von fließfähigem, aushärtendem Kunststoffmaterial in eine, einen Hohlraum bildende erste Kavität und Einbringen von Gas oder Flüssigkeit zum Erzeugen eines ersten Hohlraums in das Innere des in die erste Kavität eingebrachten noch plastischen Kunststoffmaterials, Schaffung einer zweiten Kavität, deren Innenwandung und zumindest bereichsweise die Außenwandung des eingebrachten Kunststoffmaterials einen vergrößerten zweiten Hohlraum als den durch die erste Kavität gebildeten Hohlraum bilden und Einbringen oder Einspritzen von weichem Kunststoffmaterial in den zweiten Hohlraum.

### STAND DER TECHNIK

Es ist das sogenannte Hohlraumverfahren bekannt, das beispielsweise in der EP 0 545 028 B1 beschrieben ist. Dabei werden Bauteile aus Kunststoff aus Gründen der Herstellbarkeit, der Gewichtsreduktion oder wegen der besseren Steifigkeit häufig in diesem sogenannten Hohlraumverfahren hergestellt. Hierbei wird während des Herstellungsprozesses ein Gas oder eine Flüssigkeit in das noch plastische Kunststoffbauteil gepresst, so das ein Hohlraum entsteht. Das Gas verflüchtigt sich anschließend von selbst. Bei Verwendung von Flüssigkeit muss diese noch entfernt werden.

Das Umspritzen von mittels Fluidinjektionstechnik hergestellten Hohlkörpern mit weichen Kunststoffen (zum Beispiel zur Erzeugung eines Soft-Touch Effektes) ist im Stand der Technik bekannt. So offenbaren beispielsweise die Dokumente EP-A1-0 636 465, EP-A1-1484154, US 2002/070484 A1, JP 2001 096633 A und GYOT H: "SOFT BUT STRONG" EUROPEAN PLASTIC NEWS, EMAP BUSINESS PUBLICATION, LONDON, GB, Bd. 22, Nr. 1, Januar 1995, Seite 17, Verfahren zur Herstellung von Griffen mit Hohlräumen, und umspritzten Weichkomponente gemäß dem Oberbegriff von Anspruch 1.

Die Erzeugung eines Gegendruckes, um das Zusammendrücken des Vorspritzlings zu vermeiden, ist in der EP-A1-0 636 465 beschrieben. Die Veröffentlichung BRUNSWICK A: "GEWUSST WIE! FRAGEN UND ANTWORTEN ZUR WASSERINJEKTION" KUNSTSTOFFE, CARL HANSER VERLAG, MÜNCHEN, DE, Bd. 92, Nr. 9, September 2002, Seiten 94-98, lehrt die Verwendung von Wasser als inkompressiblen Kern.

Bei diesen Verfahren wird zunächst der Hohlraum durch Einbringen von Gas oder Flüssigkeit in das Innere des plastischen Kunststoffmaterials hergestellt und anschließend die Weichkomponente umspritzt.

### DARSTELLUNG DER ERFINDUNG

Ausgehend von dem genannten Stand der Technik liegt der vorliegenden Erfindung die Aufgabe beziehungsweise das Problem zugrunde, eine Vorrichtung und ein Verfahren zum Herstellen von Kunststoffbauteilen anzugeben, die einerseits die Vorteile des Hohlraumverfahrens ermöglicht und gleichzeitig ein Kunststoffteil mit weicher Oberfläche herstellbar ist.

Das erfindungsgemäße Verfahren ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Das erfindungsgemäße Verfahren zeichnet sich dadurch aus, dass die Schaffung einer zweiten Kavität und das Einbringen oder Einspritzen von weichem Kunststoffmaterial vor dem Einbringen von Gas oder Flüssigkeit in das Innere des Kunststoffmaterials erfolgt. Bei dieser Ausgestaltung ist von Vorteil, dass beim Einbringen der Weichkomponente noch ein vollständiger Kunststoffmaterialkern vorliegt, der trotz des Einbringdrucks der Weichkomponente nicht verformt wird. Anschließend wird in das noch plastische Innere des Kunststoffmaterials zur Bildung eines Hohlraums Gas oder Flüssigkeit eingebracht.

Eine bevorzugte Ausgestaltung zeichnet sich dadurch aus, dass bei der Schaffung der zweiten Kavität der zweite Hohlraum so ausgebildet wird, dass er das Kunststoffmaterial in einem Teilbereich bis zu 180° (Altgrad) umgibt, wobei auch Ausgestaltungen mit einem Umgebungsbereich von bis zu 360° (Altgrad) problemlos umsetzbar sind.

Bei dem Einbringen des Gases oder der Flüssigkeit in das Innere des noch plastischen Kunststoffmaterials wird bevorzugt eine Nebenkavität eingesetzt, in den das Kunststoffmaterial des Innenbereiches zur Bildung des Hohlraums im Inneren der Kavität verdrängt wird.

Alternativ kann auch das sogenannte Aufblasverfahren oder das Masserückdrückverfahren eingesetzt werden.

Als Material für die Weichkomponente kommt beispielsweise TPE, TPU als Überspritzmaterial oder PUR als Beschäummaterial in Betracht.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a bis d: stark schematisierte Verfahrenszustände einer Vorrichtung zum Herstellen von Kunststoffspritzteilen,
- Fig. 2a bis c erfindungsgemäße,: stark schematisierte Verfahrenszustände einer Vorrichtung zum Herstellen von Kunststoffspritzteilen,
- Fig. 3: schematische Draufsicht auf eine Hälfte eines Dachhaltegriffs, dessen Profil mittels einer Vorrichtung gemäß den Fig. 1a bis d hergestellt worden ist und
- Fig. 4: schematischer Schnitt durch das Bauteil gemäß Fig. 3 entlang Schnittführung A-A.

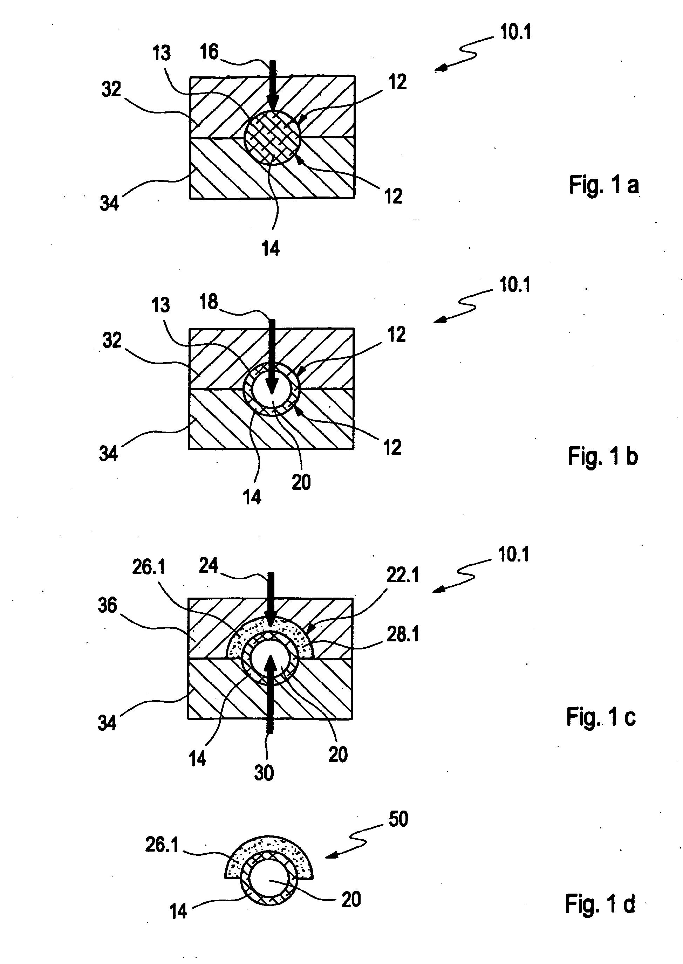

In Fig. 1 ist ein Beispiel einer Vorrichtung 10.1 stark schematisiert dargestellt anhand der einzelner Verfahrensschritte nach dem Stand der Technik zur Herstellung eines Kunststoffteils 50 (Fig. 1d).

Die Vorrichtung 10.1 besitzt eine obere Werkzeughälfte 32 und eine untere Werkzeughälfte 34, die jeweils eine Ausnehmung aufweisen, so dass eine in Fig. 1a dargestellte im Ausführungsbeispiel kreisrunde erste Kavität 12 vorhanden ist, die einen Hohlraum 13 bildet. In diese erste Kavität 12 wird über Mittel 16 zum Einbringen fließfähiges, aushärtendes Kunststoffmaterial 14 in das Innere der ersten Kavität 12 gespritzt.

Unmittelbar danach wird über Mittel 18 zum Einbringen von Gas in das noch plastische Innere des Kunststoffmaterials 14 Gas eingedrückt, so dass ein erster Hohlraum 20 entsteht. Das dabei verdrängte Kunststoffmaterial wird beispielsweise einer in den Figuren nicht näher dargestellten Nebenkavität zugeführt oder in eine Einspritzdüse zurückgedrückt.

Daran anschließend wird die obere Werkzeughälfte 32 durch eine zweite obere Werkzeughälfte 36 ersetzt, die eine zweite Kavität 22.1 aufweist, deren Durchmesser halbkreisförmig größer ist als der Außendurchmesser des eingebrachten Kunststoffmaterials 14. Die Bildung der zweiten Kavität 22.1 kann alternativ durch Vergrößerung der ersten Kavität 12 erfolgen. Dadurch wird oberhalb des eingebrachten Kunststoffmaterials 14 ein zweiter Hohlraum 28.1 gebildet. Daran anschließend werden Mittel 24 zum Einbringen von weichem Kunststoffmaterial eingesetzt, die in den zweiten Hohlraum 28 weiches Kunststoffmaterial 26.1 eindrücken. Während des Eindrückens von weichem Kunststoffmaterial 26.1 durch die Mittel 24 können Mittel 30 zur Schaffung eines Gegendrucks innerhalb des ersten Hohlraums 20 aktiviert sein, um Eindrückungen des bereits eingebrachten Kunststoffmaterials 14 zu verhindern.

Es ist beispielsweise möglich, dass zur Verbringung des eingebrachten Kunststoffmaterials 14 aus der ersten Kavität 12 in die zweite Kavität 22.2 in den Figuren nicht näher dargestellte Mittel zum Positionieren des im ersten Schritt eingebrachten Kunststoffmaterials 14 eingesetzt werden.

Nach dem Aushärten und Entformen ist das in Fig. 1d dargestellte Kunststoffteil 50 erstellt, das ein hohles Tragprofil aufweist, das oberseitig von einer weichen Kunststoffschicht umgeben ist.

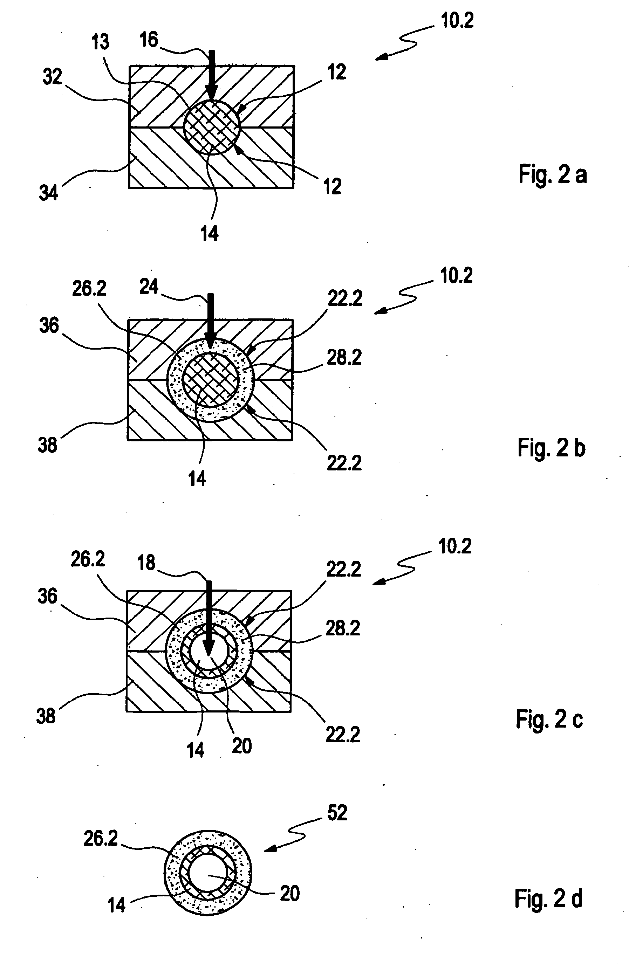

In Fig. 2 ist eine Wege zum Ausführen der Erfindung Vorrichtung 10.2 dargestellt, die prinzipiell einen ähnlichen Aufbau aufweist, wie die Vorrichtung 10.1 gemäß Fig. 1. Gleiche Bauteile tragen dasselbe Bezugszeichen und werden nicht nochmals erläutert.

Auch bei der Vorrichtung 10.2 wird zunächst fließfähiges, aushärtbares Kunststoffmaterial 14 in das Innere der ersten Kavität 12 eingespritzt. Daran anschließend wird jedoch sowohl die obere Werkzeughälfte 32 als auch die untere Werkzeughälfte 34 durch eine zweite obere Werkzeughälfte 36 und eine zweite untere Werkzeughälfte 38 ersetzt, wobei beide Werkzeughälften 36, 38 Ausnehmungen aufweisen, die zusammengesetzt eine zweite Kavität 22.2 ergeben, deren Außendurchmesser größer ist als der Außendurchmesser des eingebrachten Kunststoffmaterials 14. Dadurch entsteht im Querschnitt ein kreisringförmiger zweiter Hohlraum 28.2 in den über die Mittel 24 weiches Kunststoffmaterial 26.2 in den zweiten Hohlraum 28.2 eingebracht wird. Bei diesem Vorgang ist das Kunststoffmaterial 14 noch als Vollmaterialbauteil vorhanden, so dass es nicht zu Querschnittsverformungen aufgrund des Einbringdruckes des weichen Kunststoffmaterials 26.2 kommt.

Daran anschließend wird in das noch plastische Innere des Kunststoffmaterials 14 über die Mittel 18 zum Anbringen von Gas in das Innere des Kunststoffmaterials 14 eingebracht, so dass sich wiederum ein erster Hohlraum 20 bildet.

Nach dem Aushärten und Entformen liegt ein Kunststoffbauteil 52 gemäß Fig. 2d vor, das ein hohles Tragprofil besitzt, das vollständig von weichem Kunststoffmaterial 26.2 umgeben ist.

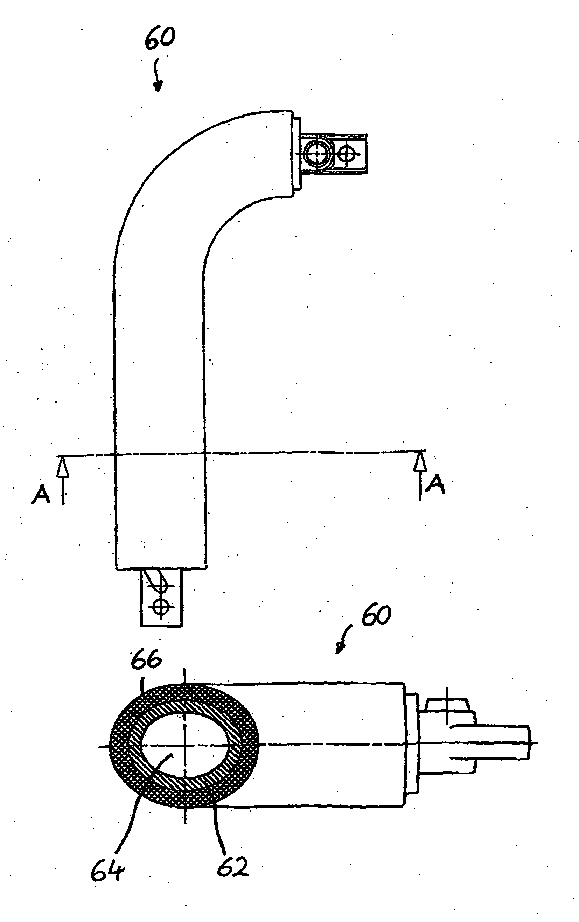

In Fig. 3 ist schematisch eine Hälfte eines Dachhaltegriffs 60 für ein Fahrzeug dargestellt, dessen Profilquerschnitt mittels dem Verfahren gemäß der Vorrichtung der Figuren 2a bis d hergestellt worden ist. In der Schnittdarstellung gemäß Fig. 4 ist deutlich ein elliptisches Tragprofil 62 mit einem elliptischen Hohlraum 64 zu erkennen, wobei das Tragprofil 62 vollumfänglich von einer Schicht 66 aus weichem Kunststoffmaterial umgeben ist.

Der dargestellte Dachhaltegriff 60 ist lediglich ein Ausführungsbeispiel eines Kunststoffbauteils, das mit den oben beschriebenen Vorrichtungen hergestellt werden kann. Es ist eine Vielzahl von weiteren Kunststoffteilen mit unterschildlichster Hohlprofilquerschnittsausbildung und zumindest bereichsweiser Beschichtung mit weichem Kunststoffmaterial denkbar.

## Patentansprüche

1. Verfahren zum Herstellen von Kunststoffteilen (50, 52) mit folgenden Verfahrensschritten
- Einbringen oder Einspritzen von fließfähigem, aushärtendem ersten Kunststoffmaterial (14) in eine, einen Hohlraum (13) bildende erste Kavität (12) und
- Einbringen von Gas oder Flüssigkeit zum Erzeugen eines ersten Hohlraums (20) in das Innere des in die erste Kavität (12) eingebrachten noch plastischen ersten Kunststoffmaterials (14),
- Schaffung einer zweiten Kavität (22.1, 22.2), deren Innenwandung und zumindest bereichsweise die Außenwandung des eingebrachten ersten Kunststoffmaterials (14) einen vergrößerten zweiten Hohlraum (28.1, 28.2) als den durch die erste Kavität (12) gebildeten Hohlraum (13) bilden und
- Einbringen oder Einspritzen von weichem Kunststoffmaterial (26.1, 26.2) in den zweiten Hohlraum (28.1, 28.2),
- **dadurch gekennzeichnet, dass**
- die Schaffung einer zweiten Kavität (22.2) und das Einbringen oder Einspritzen von weichem Kunststoffmaterial (26.2) vor dem Einbringen von Gas oder Flüssigkeit in das Innere des ersten Kunststoffmaterials (14) erfolgt.

2. Verfahren nach Anspruch 1,
- **dadurch gekennzeichnet, dass**
- bei der Schaffung der zweiten Kavität (22.1) der zweite Hohlraum (28.1) so ausgebildet wird, dass er das erste Kunststoffmaterial (14) in einem Teilbereich bis zu 180° (Altgrad) umgibt.

3. Verfahren nach Anspruch 1,
- **dadurch gekennzeichnet, dass**
- bei der Schaffung der zweiten Kavität (22.2) der zweite Hohlraum (28.2) so ausgebildet wird, dass er das erste Kunststoffmaterial (14) in einem Bereich bis zu 360° (Altgrad) umgibt.

4. Verfahren nach einem oder mehreren der vorstehenden Ansprüche,
- **dadurch gekennzeichnet, dass**
- bei dem Einbringen des Gases oder der Flüssigkeit in das Innere des noch plastischen Kunststoffmaterials eine Nebenkavität eingesetzt wird, in den das Kunststoffmaterial des Innenbereiches zur Bildung des Hohlraums im Inneren der Kavität verdrängt wird.

## Claims

1. Method for manufacturing plastic parts (50, 52) comprising the following method steps
- introducing or injecting flowable, hardening first polymer material (14) into a first cavity (12), forming a hollow space (13), and
- introducing gas or liquid for producing a first hollow space (20) into the interior of the still plastic first polymer material (14) introduced into the first cavity (12),
- creating a second cavity (22.1, 22.2), the inner wall of which and at least portions of the outer wall of the first polymer material (14) introduced forming an enlarged second hollow space (28.1, 28.2) as compared with the hollow space (13) formed by the first cavity (12) and
- introducing or injecting soft polymer material (26.1, 26.2) into the second hollow space (28.1, 28.2),
**characterized in that**
- the creation of a second cavity (22.2) and the introduction or injection of soft polymer material (26.2) take place before the introduction of gas or liquid into the interior of the first polymer material (14).

2. Method according to Claim 1, **characterized in that**, in the creation of the second cavity (22.1), the second hollow space (28.1) is formed in such a way that it surrounds the first polymer material (14) in a partial region of up to 180° (angular degrees).

3. Method according to Claim 1, **characterized in that**, in the creation of the second cavity (22.2), the second hollow space (28.2) is formed in such a way that it surrounds the first polymer material (14) in a region of up to 360° (angular degrees).

4. Method according to one or more of the preceding claims, **characterized in that**, in the introduction of the gas or the liquid into the interior of the still plastic polymer material, a secondary cavity is used, into which the polymer material of the inner region is displaced to form the hollow space in the interior of the cavity.

## Revendications

1. Procédé de fabrication de pièces (50, 52) en matière synthétique, comprenant les étapes suivantes
- introduction ou injection d'une première matière synthétique (14) fluide et durcissant dans une première cavité (12) formant un espace creux (13), et
- introduction de gaz ou de liquide pour produire un premier espace creux (20) à l'intérieur de la première matière synthétique (14) encore dans l'état plastique introduite dans la première cavité (12),
- création d'une deuxième cavité (22.1, 22.2), dont la paroi intérieure et au moins sectoriellement la paroi extérieure de la première matière synthétique introduite (14) forment un deuxième espace creux (28.1, 28.2) plus grand que l'espace creux (13) formé par la première cavité (12), et
- introduction ou injection de matière synthétique molle (26.1, 26.2) dans le deuxième espace creux (28.1, 28.2),
**caractérisé en ce que** la création d'une deuxième cavité (22.2) et l'introduction ou l'injection de matière synthétique molle (26.2) s'effectuent avant l'introduction de gaz ou de liquide à l'intérieur de la première matière synthétique (14).

2. Procédé selon la revendication 1, **caractérisé en ce que**, lors de la création de la deuxième cavité (22.1), le deuxième espace creux (28.1) est configuré de telle sorte qu'il entoure la première matière synthétique (14) dans une région partielle allant jusqu'à 180° (degrés d'angle).

3. Procédé selon la revendication 1, **caractérisé en ce que**, lors de la création de la deuxième cavité (22.2), le deuxième espace creux (28.2) est configuré de telle sorte qu'il entoure la première matière synthétique (14) dans une région allant jusqu'à 360° (degrés d'angle).

4. Procédé selon une ou plusieurs des revendications précédentes, **caractérisé en ce que**, pour l'introduction du gaz ou du liquide à l'intérieur de la matière synthétique encore dans l'état plastique, on utilise une cavité auxiliaire dans laquelle la matière synthétique de la région intérieure est refoulée pour former l'espace creux à l'intérieur de la cavité.
